# EUROPEAN PATENT SPECIFICATION

(11) **EP 0 394 208 B1**
(45) Date of publication and mention of the grant of the patent: **23.03.1994**
(21) Application number: 90850141.4
(22) Date of filing: 18.04.1990
(51) Int. Cl.: A01F 25/20

(54) **A protective device for silage grabs**
Schutzvorrichtung für Silageschneider
Dispositif de protection pour prélever du fourrage ensilé

(30) Priority: 19.04.1989 SE 8901415
(43) Date of publication of application: 24.10.1990
(73) Proprietor: AB ALÖ-MASKINER, S-905 90 Umea (SE)
(72) Inventor: Lindberg, Arne, S-905 90 Umea (SE)
(74) Representative: Onn, Thorsten

(56) References cited:
- FR-A- 2 124 224
- FR-A- 2 312 943

## Description

This invention relates to a protective device for silage grabs of the kind comprising a rear frame part having attachment means for fitting the grab to a carrier vehicle, and a front part which is pivotally arranged in relation to the rear frame part, the front part comprising at least one cutting edge, and which grab further comprises means for bringing about the pivoting movement of the front part in relation to the rear frame part.

There are commercially available several different kinds of so-called silage grabs by means of which, for instance, a square section block of silage can be cut out from silage or fodder clamps, and transported to the intended delivery site while held by the grab, which is normally carried on an agricultural tractor.

A silage grab of this kind is described and illustrated in the published GB Patent Application No. 2 191 992 A.

The object of the present invention is to provide such silage grabs with a higly simple, but nevertheless effective protective device, or guard, which will shield the cutting edge of the grab from unintentional contact with people and animals present in the vicinity thereof to the greatest possible extent, and therewith guard against accidental injury to both humans and animals. This object is achieved by a protective device having the characteristic features set forth in the following claims.

The inventive device is thus effective in preventing people and animals from coming into accidental contact with the cutting edge or edges with which silage is cut from the silo or fodder clamp. This safety measure is essential when, for instance, feeding animals, which in their eagerness to reach the food are likely to come into contact with the cutting edge(s) and inflict serious injury upon themselves.

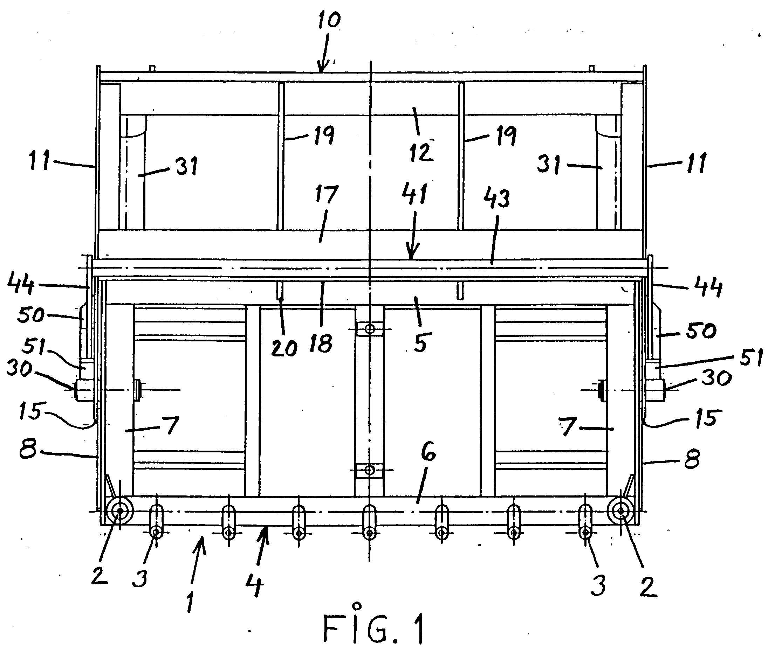

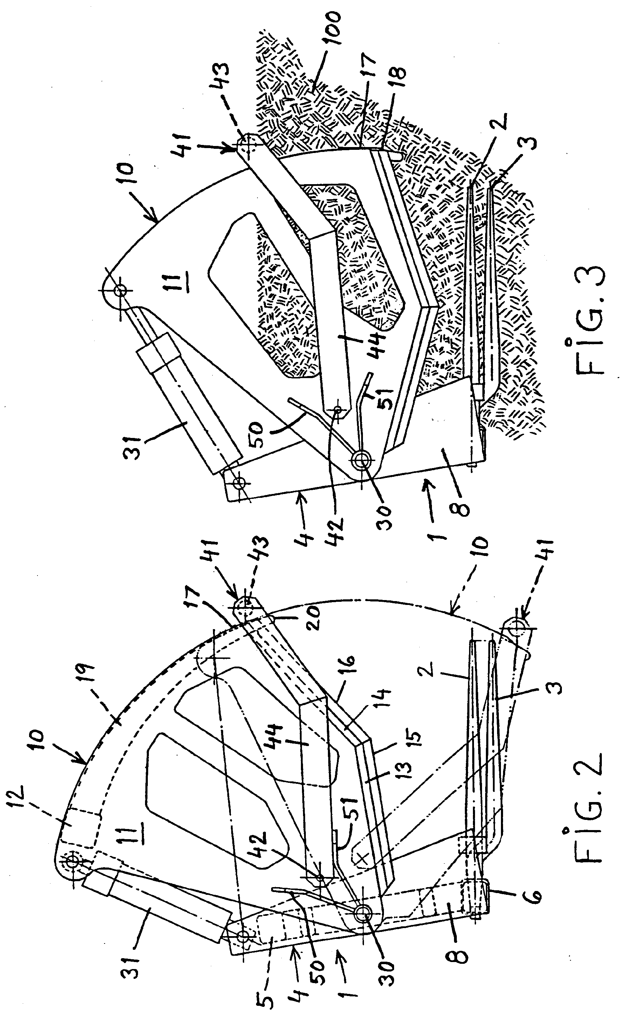

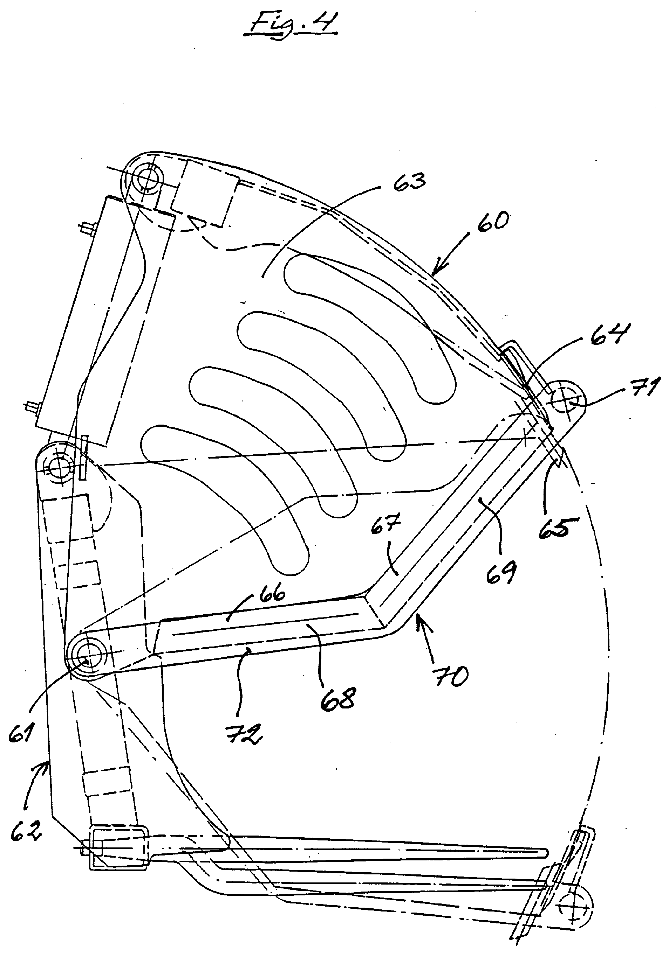

The invention will now be described in more detail with reference to exemplifying embodiments thereof illustrated in the accompanying drawings, in which Fig. 1 shows a front view of a silage grab equipped with the protective device according to the invention, the grab being shown in an open position; Fig. 2 shows a side view of a first embodiment of the silage grab; Fig. 3 shows a side view of the silage grab of Fig. 2 at the moment of cutting silage from a fodder store, e.g. a silage clamp; and Fig. 4 shows a side view of a second embodiment of the silage grab.

The silage grab is intended for connection to a front loader of an agricultural tractor or to a loading machine and includes a rear frame part 1 which comprises a plurality of essentially horizontal rods or tines 2, 3 which together form the floor of the grab. The rear frame section 1 also includes a body structure 4 which comprises, inter alia, a top rail 5, a bottom rail 6 and two side rails 7, these rails and an number of bracing struts being welded together to form the body structure 4. The body structure also includes two side plates 8 and attachments (not shown) for enabling the grab to be connected to the front loader of a tractor or to a loading machine for instance. The tines 2 are attached to the bottom rail 6.

The silage grab also includes a pivotally mounted front part 10 which comprises, inter alia, two side walls 11 and a cross bar 12, which connects the side walls together. Mounted adjacent to the bottom edge of the side walls are plates 13, 14, each of which carries a respective cutting edge 15 and 16, said cutting edges being angled relatively to one another, so as to enable the silage to be cut effectively from the clamp. A further plate 17 with a further cutting edge 18 is mounted between the side walls 11 adjacent the lower front edges thereof. Mounted between the cross-bar 12 and the further plate 17 are two support forks 19, the free ends 20 of which preferably extend slightly below the front cutting edge 18 on the front part 10.

The front part 10 is journalled for pivotal movement in relation to the rear frame part 1 via two bearings 30, as shown in the figures. Two double-acting piston-cylinder devices operated by a pressurised medium, for instance hydraulic rams 31, are arranged to act between the rear frame part 1 and the front part 10 in a manner to allow the front part to be swung/maneuvered between an upper open position, shown in full lines in Fig. 2, and a lower closed position, indicated in chain lines in Fig. 2. The silage is cut from the clamp, as the front part 10 swings between the open and closed positions. Hydraulic fluid is supplied to the hydraulic rams 31 from, for instance, the hydraulic system of the tractor.

In accordance with the invention, the grab is fitted with a protective device, which has the form of a protective arcuate guard 41 which is mounted on two bearings 42 for pivotal movement in relation to the side walls 11 of the front part 10. The arcuate guard has a front part in the form of a tube 43 and two side parts in the form of respective curved arms 44, one end of each of which is connected to the tube 43 and the other end of each of which carries the bearing 42. The arms 44 are curved, so that they will conform to the positioning of the side cutting edges, to the greatest possible extent.

Mounted on the side walls 11 of the front part 10 is an upper and a lower stop device 50 and 51 respectively. The upper stop devices 50 are operative to prevent the arcuate guard from swinging upwards to such an extent as to topple over rearwardly. When no force acts on the arcuate guard 41, it rests against the lower stop devices 51 under its own weight, as illustrated in Fig. 2.

Referring to Fig. 4 is shown there a second embodiment of the silage grab. This one has essentially the same construction as the silage grab according to the first embodiment shown in Fig. 2 and accordingly comprises a front part 60, which is pivotally journalled on a shaft journal 61 or the like in a rear frame part 62. The frame part 62 has two side walls, positioned at a distance from each other and of which only one 63 is shown in the drawing. In the same way as previously the side walls 63 at their lower, front portion are connected by a plate 64, which carries a cutting edge 65 at its lower portion. The lower part of the side walls is provided with plates 66, 67, which are provided with a cutting edge 68, 69, respectively, and which are angled in relation to each other in similarity with the embodiment according to Fig. 2, whereby the silage can be cut out effectively from the silage clamp.

The embodiment according to Fig. 4 is in similarity with the embodiment according to Fig. 2 provided with a protective member 70, which is pivotally journalled in relation to the front part 60 of the silage grab. This protective member has an arcuate form and comprises a front part 71 in the form of a tube or the like and two side arms 72, the front ends of which are fastened to the front part 71, and the rear ends of which are fastened to the rear part of the silage grab. In that connection the end of each 72 is pivotally journalled in the shaft 61 which projects laterally from the rear frame part 62 to a point outside each side wall 63.

An essential difference between the embodiment according to Fig. 4 and that according to Fig. 2 is that the protective device in the first-mentioned embodiment is pivotally journalled in the rear frame part 62 on the same shaft journal 62 or the like as the front part 60 of the silage grab. Due to partly that fact and partly the fact that the side arms 72 have a curvature corresponding to the angle between the cutting edges 68, 69 at the lower part of the side wall 63, so that the side arm 72 essentially follows the extension of the side cutting edges 68, 69, the protective device can give an effective protection against contact with the cutting edges not only at the front portion of the silage grab but also at the two side walls of the silage grab.

The protective device according to Fig. 4 in similarity with the protective device according to Fig. 2 is provided with a stop means so that the protective member 70 cannot be pivoted so much in relation to the front part 60 that the protective member takes a position below the front part 60 as is apparent from Fig. 4.

The protective device functions in the following manner: The grab is brought up to the silage clamp concerned with the grab open, i.e. with the front part 10; 60 and the protective member 41; 70 in their respective positions shown in Figs. 2, 4. The grab is then maneuvered so that the tines 2, 3 enter the silage 100, whereafter the hydraulic rams 31 are activated to swing the front part 10; 60 of the grab downwards and therewith cut a block of silage from the clamp. During this swinging movement of the front part 10; 60, the protective member 41; 70 will move out of abutment with the lower stop device and rest instead on the silage, as shown i Fig. 3. When the grab has completed its cutting action and has cut a block of silage from the clamp, i.e. when the front part 10; 60 has been swung to its lowest terminal position, indicated in clain lines in Fig. 2, and the grab has been moved away from the silage clamp 100, the protective member 41; 70 will fall gravitationally onto the lower stop device therewith once more shielding the cutting edges of the grab such as to prevent contact therewith. When depositing the block of silage at the place intended, the protective member 41; 70 will accompany the movement of the cutting edges 15, 16, 18; 65, 68, 69 as the front part 10; 60 is opened.

It will be understood that the inventive protective device can be adapted readily, for instance, to varying cutting edge configurations, so that effective protection against injurious contact with the cutting edge(s) can be provided at all times.

It will be understood that the invention is not restricted to the particular silage grab described above and that the protective device according to the invention can also be used with grabs of different design.

The invention is not therefore restricted to the described and illustrated embodiments thereof, since modifications can be made within the scope of the following claims.

## Claims

1. A protective device for silage qrabs of the kind comprising a rear frame part (1;62) having attachment means for fitting the grab to a carrier vehicle, and a front part (10;60) which is pivotally arranged in relation to the rear frame part, the front part comprising at least one cutting edge (15, 16, 18; 65, 68, 69), and which grab further comprises means (31) for bringing about the pivoting movement of the front part (10;61) in relation to the rear frame part (1;62) **cha****racterized** in that the protective device comprises a cutting edge protective member (41;70) which is pivotally journalled in relation to the front part (10;60) of the silage grab, and that the protective member (41;70) comprises a front part (43;71) and two side arms (44;72), the one end of each arm being connected to the front part (43;71) of the protective member and the other end of each arm being pivotally journalled in the front part (10;60) of the silage grab.

2. A protective device according to claim 1, **characterized** in that the other end of each arm (44) is pivotally journalled on respective side wall (11).

3. A protective device according to claim 1, **characterized** in that the other end of each arm (72) is pivotally journalled on a shaft (30;61) which projects laterally from the rear frame part (1;62) to a point outside each side wall (11;63), the same shafts (30;61) also being used for the pivotal suspension of the front part (10;60) of the silage grab.

4. A protective device according to claim 3, each side wall (63) at its lower part having plates (66, 67) with a cutting edge (68, 69), which are angled in relation to each other, **characterized** in that each arm (72) is curved to such extent that the curature essentially corresponds to the angle between the plates (66, 67) with the cutting edges (68, 69), whereby the side arm (72) essentially follows the extension of the side cutting edges and gives a protection against a contact with the side cutting edges of the silage grab.

5. A protective device according to any one of the preceding claims, **characterized** in that the front part (10;60) is provided with at least one stop means (51) operative in limiting the downward pivoting movement of the protective member (41;70).

6. A protective device according to claim 1 or 2, **characterized** in that the front part (10) is provided with at least one stop means (50) operative in limiting the upward pivoting movement of the protecting member (41).

## Patentansprüche

1. Schutzvorrichtung für Silagegreifer der Art, die ein hinteres Rahmenteil (1; 62) umfassen, das Befestigungsmittel zum Anbringen des Greifers an einem Trägerfahrzeug aufweist, und ein Vorderteil (10; 60) umfassen, das relativ zum hinteren Rahmenteil schwenkbar angeordnet ist, wobei das Vorderteil wenigstens eine Schneide (15, 16, 18; 65, 68, 69) umfaßt, welcher Greifer ferner Mittel (31) zum Herbeiführen der Schwenkbewegung des Vorderteils (10; 60) relativ zum hinteren Rahmenteil (1; 62) umfaßt,
**dadurch gekennzeichnet,**
daß die Schutzvorrichtung ein Schneidenschutzelement (41; 70) umfaßt, das relativ zum Vorderteil (10; 60) des Silagegrei- fers schwenkbar gelagert ist, und daß das Schutzelement (41; 70) ein Vorderteil (43; 71) sowie zwei Seitenarme (44; 72) umfaßt, wobei das eine Ende jedes Arms mit dem Vorderteil (43; 71) des Schutzelements verbunden ist und das andere Ende jedes Arms schwenkbar in dem Vorderteil (10; 60) des Silagegreifers gelagert ist.

2. Schutzvorrichtung nach Anspruch 1,
**dadurch gekennzeichnet,**
daß das anders Ende jedes Arms (44) an entsprechenden Seitenwänden (11) schwenkbar gelagert ist.

3. Schutzvorrichtung nach Anspruch 1,
**dadurch gekennzeichnet,**
daß das andere Ende jedes Arms (72) schwenkbar an einer Welle (30; 61) gelagert ist, die seitlich von dem hinteren Rahmenteil (1; 62) bis zu einem Punkt außerhalb jeder Seitenwand (11; 63) vorsteht, wobei die selben Wellen (30; 61) ebenfalls für die Schwenkaufhängung des Vorderteils (10; 60) des Silagegreifers verwendet werden.

4. Schutzvorrichtung nach Anspruch 3, wobei jede Seitenwand (63) an ihrem unteren Teil gegeneinander angewinkelte Platten (66, 67) mit einer Schneide (68, 69) aufweist,
**dadurch gekennzeichnet,**
daß jeder Arm (72) in einem solchen Maße gekrümmt ist, daß die Krümmung im wesentlichen dem Winkel zwischen den Platten (66, 67) mit den schneiden (68, 69) entspricht, wodurch der Seitenarm (72) im wesentlichen dem Verlauf der seitlichen Schneiden folgt und Schutz gegen einen Kontakt mit den seitlichen Schneiden des silagegreifers gibt.

5. Schutzvorrichtung nach einem der vorhergehenden Ansprüche,
**dadurch gekennzeichnet,**
daß das Vorderteil (10; 60) mit wenigstens einem, eine Begrenzung der Abwärtsschwenkbewegung des Schutzelements (41; 70) bewirkenden Anschlagmittel (51) versehen ist.

6. Schutzvorrichtung nach Anspruch 1 oder 2,
**dadurch gekennzeichnet,**
daß das Vorderteil (10) mit wenigstens einem, eine Begrenzung der Aufwärtsschwenkbewegung des Schutzelements (41) bewirkenden Anschlagmittel (50) versehen ist.

## Revendications

1. Dispositif de protection pour des grappins de prélèvement de fourrage ensilé du type comprenant une partie de châssis arrière (1; 62) comportant des moyens de fixation pour le montage du grappin sur un véhicule porteur, et une partie avant (10; 60) qui est disposée de façon pivotante par rapport à la partie de châssis arrière, la partie avant comprenant au moins un bord coupant (15, 16, 18 ; 65, 68, 69), et le grappin comprenant de plus des moyens (31) pour provoquer le mouvement pivotant de la partie avant (10; 60) par rapport à la partie de châssis arrière (1; 62), caractérisé en ce que le dispositif de protection comprend un élément de protection de bord coupant (41; 70) qui est monté sur palier de façon pivotante par rapport à la partie avant (10; 60) du grappin de fourrage ensilé, et en ce que l'élément de protection (41; 70) comprend une partie avant (43; 73) et deux bras latéraux (44; 72), l'une des extrémités de chaque bras étant raccordée à la partie avant (43; 71) de l'élément de protection et l'autre extrémité de chaque bras étant montée sur palier de façon pivotante dans la partie avant (10; 60) du grappin pour prélèvement de fourrage ensilé.

2. Dispositif de protection selon la revendication 1, caractérisé en ce que l'autre extrémité de chaque bras (44) est montée sur palier de façon pivotante sur la paroi latérale respective (11).

3. Dispositif de protection selon la revendication 1, caractérisé en ce que l'autre extrémité de chaque bras (72) est montée sur palier de façon pivotante sur un arbre (30; 61) qui fait saillie latéralement à partir de la partie de châssis arrière (1; 62) sur un point situé à l'extérieur de chaque paroi latérale (11; 63), les mêmes arbres (30; 61) étant également utilisés pour la suspension pivotante de la partie avant (10; 60) du grappin pour prélèvement de fourrage ensilé.

4. Dispositif de protection selon la revendication 3, chaque paroi latérale (63) sur sa partie inférieure comportant des plaques (66, 67) dotées d'un bord coupant (68, 69) qui forment un angle l'une par rapport à l'autre, caractérisé en ce que chaque bras (72) est courbé dans des proportions telles que la courbure correspond sensiblement à l'angle entre les plaques (66, 67) avec les bords coupants (68, 69), de sorte que le bras latéral (72) suit sensiblement le prolongement des bords coupants latéraux et offre une protection vis-à-vis du contact avec les bords de coupe latéraux du grappin destiné à prélever le fourrage ensilé.

5. Dispositif de protection selon l'une quelconque des revendications précédentes, caractérisé en ce que la partie avant (10; 60) est munie d'au moins une butée (51) opérante pour limiter le mouvement pivotant vers le bas de l'élément de protection (41; 70).

6. Dispositif de protection selon la revendication 1 ou 2, caractérisé en ce que la partie avant (10) est munie d'au moins une butée (50) opérante pour limiter le mouvement de pivotement vers le haut de l'élément de protection (41).
